# EUROPEAN PATENT SPECIFICATION

(11) **EP 3 362 525 B1**
(45) Date of publication and mention of the grant of the patent: **03.11.2021**
(21) Application number: 15906008.6
(22) Date of filing: 12.10.2015
(51) Int. Cl.: C09D 131/04, C09D 123/08, C09D 127/06, C09D 4/02

(54) **TOPCOAT COMPOSITION, METHOD OF COATING SUBSTRATES WITH THE SAME, AND SUBSTRATE**
DECKSCHICHTZUSAMMENSETZUNG, VERFAHREN ZUR BESCHICHTUNG VON SUBSTRATEN DAMIT UND SUBSTRAT
COMPOSITION DE COUCHE DE FINITION, PROCÉDÉ DE REVÊTEMENT DE SUBSTRATS AVEC CETTE DERNIÈRE, ET SUBSTRAT

(43) Date of publication of application: 22.08.2018
(73) Proprietor: PPG Coatings (Tianjin) Co., Ltd., Tianjin 300457 (CN)
(72) Inventor: SUN, Meiru, Tianjin 300061 (CN); YAN, Hailong, Bozhou Anhui 236800 (CN)
(74) Representative: f & e patent
(86) International application number: PCT/CN2015/091759
(87) International publication number: WO 2017/063123

(56) References cited:
- WO-A1-2005/087817
- CN-A- 102 199 377
- CN-A- 102 199 377
- CN-A- 103 059 698
- CN-A- 103 059 698
- US-A- 4 371 566
- US-A1- 2005 065 226
- US-B1- 6 228 433
- None

## Description

### TECHNICAL FIELD

The present invention relates to a topcoat composition, especially to a high solid radiation curable topcoat composition having good iodine stain resistance and flame retardance. The present invention further relates to a method of coating a substrate with the topcoat composition, and a substrate at least partially coated with the topcoat composition.

### BACKGROUND

Currently, a variety of natural or synthetic substrates are widely used as constructive or decorative materials (such as, floor coverings, panels, or the like) in public places (such as, airports, railway stations, hotels, office or factory buildings, and hospitals) or private houses. For improving the surface performance or aesthetic appearance, the substrates tend to have functional and/or decorative coatings applied on the surfaces thereof, such as, primers, topcoats, etc.

Conventional topcoats may include primarily solvent-based (SB) topcoats, waterborne (WB) topcoats, high solid content (or even 100% solids) UV topcoats, powder topcoats, and so on. Of those, the high solid content topcoats are considered as environment friendly products because they contain little or even no volatile organic compound (VOC). Moreover, the high solid content topcoats have typically good flexibility and extensibility. With the increasing environmental protective awareness of the public, the high solid content topcoats are becoming more popular in the market.

US 2005/0065226 A1 describes a paint for plastic and metallic materials, more specifically for housings of cellular phones which comprises amongst other components a UV curable acrylic-based resin comprising a urethane acrylate oligomer which may further comprise a multi-functional acrylic monomeric reactive diluent. The paint also comprises a filler and a dispersion of wax in a solvent.

Moreover, from the safety viewpoint, it is desired that the topcoats (especially, those used on surfaces of combustible substrates, e.g., plastic, wood, or composite substrates) be flame retardant so as to modify the combustion property of the substrates or to increase the fire resistance thereof to prevent fire occurrence or to retard fire spreading. Furthermore, with respect to the substrates used in places like hospitals, clinics, and so on, it is further desired that the topcoats have good iodine stain resistance because highly permeable iodine tincture is widely used in such places, and accordingly it would be unavoidable to drop onto, e.g., floors, tabletops, walls, or the like, thereby resulting in the iodine staining on the substrates.

Therefore, there is a continuing need of a novel high solid content topcoat having both good flame retardance and good iodine-stain resistance.

### SUMMARY OF THE INVENTION

To address the aforesaid and other problems, the present invention provides a novel high solid content radiation curable coating composition comprising a combination of a thermoplastic component with a radiation curable component, which have both good flame retardance and iodine stain resistance.

The present invention provides a high solid content flame retardant and iodine stain resistant radiation curable topcoat composition as detailed in the claims which comprises:
(a) a thermoplastic component including one or both of ethylene vinyl acetate (EVA) resin comprising 5-45% of vinyl acetate units in its backbone and chloride vinyl acetate resin comprising 3-45% of vinyl acetate units in its backbone; and
(b) a radiation curable component including
   (b1) one or more acrylic oligomers from polyurethane acrylate, polyester acrylate, epoxy acrylate, and oligomers comprising one or more acrylic repeating units; and
   (b2) one or more acrylic monomers comprising isobornyl acrylate (IBOA), isodecyl acrylate (IDA), trimethylolpropane triacrylate (TMPTA), pentaerythritol triacrylate (PETA), or pentaerythritol tetraacrylate (PETTA),
wherein the composition comprises 50 to 100 wt. % of solid components.

The present invention further provides a method of coating at least a portion of a substrate, comprising: coating the substrate with the radiation curable topcoat composition in accordance with the present invention; and curing the topcoat composition with radiation.

The present invention further provides a substrate which is at least partially coated with the radiation curable topcoat compositions in accordance with the present invention.

### DETAILED DESCRIPTION OF THE INVENTION

All terms as used herein have the following definitions, unless otherwise indicated. All parts and percents as used herein are based on weight, unless otherwise indicated.

The present invention provides a high solid content flame retardant and iodine stain resistant radiation curable topcoat composition as detailed in the claims, comprising:
(a) a thermoplastic component including one or both of ethylene vinyl acetate (EVA) resin and chloride vinyl acetate resin; and
(b) a radiation curable component including one or more acrylic oligomers and one or more acrylic monomers.

As used herein, the term "solid content" refers to the mass percent of dry components in relation to total components of an emulsion or coating, and the term "high solid content" means that the resin or composition comprises from 50% to 100% solid components. In other words, the resin or composition can be adjusted to contain no solvent (such as, aqueous or non-aqueous solvent, e.g., water, volatile organic solvent, etc.), or contain a certain amount (e.g., 0 to 50%) of solvent in accordance with the requirements of flowability and viscosity of coatings, if required. Thus, in an aspect, the topcoat composition in accordance with the present invention may be 100% solids, and in another aspect, the topcoat composition in accordance with the present invention may contain, e.g., 50 wt%, 60 wt%, 70 wt%, 80 wt%, oreven 90 wt% solids. Thus, the topcoat composition in accordance with the present invention tends to exhibit relatively low toxicity and fire risk, and can satisfy the strict *Emission Standard of Volatile Organic Compounds (VOC) for Topcoat Industry* VOC, and thus they are environment friendly or "green" products.

As used herein, the term "radiation curable" means that low molecular weight materials (e.g., prepolymer, oligomers and/or monomers) in a liquid resin or composition may undergo polymerization, copolymerization, or crosslinking through radiation curing technology (also known as "energy curing technology", such as, curing by UV or high energy electron beam (EB) radiation) so as to generate high molecular weight materials. The radiation curing technology has advantages including rapid curing, low energy consumption, low solvent residues, etc.

As used herein, the term "topcoat" refers to the outermost coating layer among a multi-layer coating system consisting primarily of one or more layers of primer and one or more layers of topcoat. Accordingly, the topcoat should exhibit superior performances as compared to primer. For instance, a topcoat should possess good resistance to moisture, weather, and chemical agents (e.g., iodine tincture) and good flame retardance, and provide protection for the underlying layer(s). In general, the surface properties of a topcoat depend primarily on the resins (i.e., polymerizable materials) as used in the coatings. Typically, the topcoat composition in accordance with the present invention can be used in coordination with any conventional primer, as long as they are compatible with each other. Alternatively, the topcoat composition in accordance with the present invention can be directly applied onto the surface of any substrates without previously applying any primer.

As noted previously, the topcoat composition in accordance with the present invention may comprise a thermoplastic component as one of the essential film-forming material. Here, the term "thermoplastic component" refers to a resin or resin composition which can be cured by air-drying, e.g., at an elevated temperature (e.g., 50 °C). The thermoplastic component suitable for use in the present invention may comprise one or both of EVA resin and chloride vinyl acetate resin. The thermoplastic component is critical for the coating's performances, including but not limited to iodine stain resistance, flame retardance, hardness, and gloss.

Here, the term "ethylene vinyl acetate (EVA) resin" refers to an oligomer formed by copolymerization of ethylene monomer with vinyl acetate monomer; and the "chloride vinyl acetate resin" (also known as vinisol) refers to an oligomer formed by copolymerization of vinyl chloride monomer with vinyl acetate monomer. The EVA resin and the chloride vinyl acetate resin can be used alone, or they can be used in combination at any ratio. The EVA resin and/or the vinisol can impart the iodine stain resistant and the flame retardant properties to the topcoat compositions, but would not affect substantially the traditional advantages of the radiation curable component, such as, environmentally friendly and fast curing properties.

In one aspect, the EVA resin suitable for use in the present invention may have a weight average molecular weight (M_{w}) of 500 or greater, as measured by GPC. For instance, the EVA resin may have a M_{w} of 2,000 or greater. Moreover, the EVA resin may have a M_{w} of 50,000 or less, or may have a M_{w} of 10,000. In general, the EVA resin having a M_{w} of greater than 50,000 will impart much high viscosity to the liquid coating, and the EVA resin having smaller M_{w} (such as, a M_{w} of less than 500) will bring about bad hardness and flexibility to the cured film.

The EVA resin suitable for use in the present invention comprises 5% or greater of vinyl acetate units in its backbone, such as, 20% or greater of vinyl acetate units in its backbone; and moreover the EVA resin comprises 45 wt% or less of vinyl acetate units in its backbone, such as, 32% or less of vinyl acetate units in its backbone. Typically, the vinyl acetate units incorporated within the backbone of the EVA resin help to improve dissolubility, plasticizing effect, flexibility, transparency and incorporation ability of any fillers, whereas they are commonly bad for the tensile strength, hardness, chemical resistance, or the like. Thus, in consideration of the balance among various properties of the EVA resin, it is recommended to comprise 5 to 24% (e.g., 20 to 32%) of vinyl acetate units in the backbone of the EVA resin.

In the other aspect, the EVA resin suitable for use in the present invention may be either unmodified or modified. The term "modified" means changing physical and/or chemical properties of a resin by treating the resin with an active chemical agent. For instance, the EVA resin may be modified with a thermal plastic or radiation curable resin, e.g., polyvinyl chloride (PVC).

In a further aspect, the vinisol suitable for use in the present invention may have a M_{w} of 500 or greater, as measured by GPC, e.g., 2,000 or greater. Moreover, the vinisol may have a M_{w} of 50,000 or less, e.g., 10,000. The vinisol having a M_{w} of greater than 50,000 will impart higher viscosity to the liquid coating and bad dissolubility; while the vinisol having a M_{w} of less than 500 will result in bad hardness and flexibility to the cured film.

The vinisol suitable for use in the present invention comprises 3% or greater of vinyl acetate units in its backbone, such as, 5% or greater, e.g., 14% or greater. Moreover, the Vinisol comprises 45 % or less of vinyl acetate units in its backbone, such as, 38% or less, e.g., 25% or less. Typically, the vinyl acetate units incorporated within the backbone of the vinisol help to improve dissolubility, plasticizing effect, flexibility, transparency and incorporation ability of filters; whereas they are commonly bad for tensile strength, hardness and chemical resistance. Thus, in consideration of balancing among various properties of the vinisol, it is recommended to comprise 3% to 45% (such as, 5% to 38%, or 14 to 25%) of vinyl acetate units in the backbone of the vinisol.

In still a further aspect, the vinisol suitable for use in the present invention may be unmodified or modified. For instance, the vinisol may be modified with, e.g., styrene maleic anhydride, or the vinisol may be modified with 0.5 % to 2% of styrene maleic anhydride, which may improve the adhesion of the cured film.

The thermoplastic component may be generally present in the topcoat composition in accordance with the present invention in an amount of 5 wt% or greater, such as, 10 wt% or greater, e.g., 20 wt%, based on the total weight of the topcoat composition in accordance with the present invention. Moreover, the thermoplastic component may be generally present in the topcoat compositions in accordance with the present invention in an amount of 95 wt% or less, such as, 80 wt% or less, 60 wt% or less, 50 wt% or less, or 40 wt% or less, based on the total weight of the topcoat composition of the present invention. Since the thermoplastic component (i.e., the EVA resin and/or the vinisol) having a relatively high M_{w} does not take part in the chemical radiation curing reaction, an appropriate percentage (e.g., those satisfying the aforesaid upper and lower limits) of thermoplastic component helps to decrease the radiation cross-linking density, thereby improving the adhesion and anti-warp performance. Moreover, a thermoplastic component of, e.g., exceeding the aforesaid upper limit may result in insufficient radiation crosslinking density, and thus will have negative impact on the mechanical resistance of the cured film. In particular, the thermoplastic component used in a suitable amount (such as, in an amount falling the aforesaid range) may help to improve the iodine stain resistant and flame retardant properties. In contrast, the iodine stain resistance and the flame retardance will be negatively affected if the thermoplastic component is in an insufficient amount, such as, in an amount of less than the aforesaid lower limit.

The EVA resin and the chloride vinyl acetate resin suitable for use in the present invention may be commercially available, or can be synthesized in accordance with conventional technologies in the art. Typical examples of the commercially available EVA resins may comprise, but are not limited to, DuPont ELVAX 150W, and the like. Typical examples of the commercially available chloride vinyl acetate resin may comprise, but are not limited to, Guangzhou lu'ou T32 vinisol resin, Wacker vinnol E22/48A, or the like.

As noted previously, the topcoat composition in accordance with the present invention further comprises a radiation curable component. Here, the term "radiation curable component" refers to a composition comprising one or more oligomers and/or one or more monomers which can be crosslinked to form a netlike structure under radiation (e.g., UV or EB radiation). As practical requirements (such as, viscosity and the like), the radiation curable component may only comprise oligomer(s) or monomer(s), or a combination thereof. The radiation curable component of the topcoat composition in accordance with the present invention offers the chemical crosslinking network during the curing process.

As previously stated, the radiation curable component in accordance with the present invention comprises one or more acrylic oligomers. The term "oligomer" refers to polymers comprising a relatively small amount of repeating units in their backbone, such as, those comprising 5 to 50 repeating units, and the term "acrylic oligomer" refers to oligomers comprising one or more acrylic repeating units, such as, acrylic acid, acrylamide, acrylate, methacrylate, and the like. The acrylic oligomers suitable for use in the present invention may further comprise, if required, one or more repeating units derived from other polymerizable monomer(s), such as, olefinic monomers and the like. The acrylic oligomers can be crosslinked to form a netlike structure under radiation (e.g., UV or EB) during the curing process.

In an aspect, the acrylic oligomers suitable for use in the present invention may have a M_{w} of 500 or greater, such as, 1,000 or greater. Moreover, the acrylic oligomers suitable for use in the present invention may have a M_{w} of 20,000 or less, such as, 10,000 or less.

In another aspect, the acrylic oligomers suitable for use in the present invention may comprise polyurethane acrylate, polyester acrylate, and epoxy acrylate. Typically, acrylate oligomers having high functionalities and radiation crosslinking density may be used as the acrylic oligomer because they may contribute to iodine stain resistance and flame retardance.

The acrylic oligomers suitable for use in the present invention may be commercially available, or can be synthesized in accordance with conventional technology in the art. Typical examples of the commercially available acrylate resins may comprise, but are not limited to PPG URETHANE ACRYLATE, 2 functional polyurethane acrylate; Jiangsu Sanmu SM6205, 2 functional polyurethane acrylate; Guangdong JESIDA DSP-552F, 6 functional fluorine modified polyurethane; ETERNAL 6196-100, 15 functional polyurethane acrylate; ETERNAL ETERCURE DR-E532, 2 functional polyester acrylate; Guangdong Wuxing EA8204, 2 functional polyester acrylate; Jiangsu Sanmu SM6105-75Y, bisphenol A epoxy acrylate; and the like.

As previously stated, the radiation curable component in accordance with the present invention further comprises one or more acrylic monomers. The term "monomer" refers to a collection of small molecules which can be reacted with themselves or other molecules by polymerization or copolymerization or condensation to form a (co)polymer. The acrylic monomers suitable for use in the present invention comprise isobornyl acrylate (IBOA), isodecyl acrylate (IDA), trimethylolpropane triacrylate (TMPTA), pentaerythritol triacrylate (PETA), and pentaerythritol tetraacrylate (PETTA). The acrylic monomers (such as, IBOA, IDA, or the like) can contribute to the iodine stain resistant property of the topcoat composition.

Typically, the radiation curable component may be present in the topcoat composition in accordance with the present invention in an amount of 5 wt% or greater, such as, 20 wt% or greater, 40 wt% or greater, 50 wt% or greater, or 60 wt% or greater, based on the total weight of the topcoat composition in accordance with the present invention. Moreover, the radiation curable component may be present in the topcoat composition in accordance with the present invention in an amount of 95 wt% or less, such as, 90 wt% or less, e.g., 80% by weight of less of the topcoat composition. The monomers (such as, IBOA, IDA, or the like) may contribute to the iodine stain resistance property; and moreover they can be used to adjust the viscosity while not decrease the solid content of the resin, unlike solvents. Further, the iodine stain performance will be affected if the monomers are used in an insufficient amount; and the flexibility of the cured film may be bad, and the UV-cure response may be affected, thereby imparting improper viscosity if the monomers are used in an excess amount.

In an aspect, the acrylic oligomers may be present in the radiation curable component in accordance with the present invention in an amount of 0 wt% or greater, such as, 5 wt% or greater, 15 wt% or greater, or 25 wt% or greater, based on the total weight of the radiation curable component. Moreover, the acrylic oligomers may be present in the radiation curable component in accordance with the present invention in an amount of 100 wt% or less, 85 wt%, 65 wt% or less, 45 wt% or less, or 35% or less, based on the total weight of the radiation curable component. For instance, the acrylic oligomer may be present in the radiation curable component in accordance with the present invention in an amount of 5 wt% to 95 wt%, 10 wt% to 70 wt%, 15 wt% to 50 wt%, or 25 wt% to 35 wt% based on the total weight of the radiation curable component. If the amount of the acrylic oligomer is too low (such as, less than 5 wt%), the radiation cure response of the coating and the mechanical resistance of the cured film may be affected; and if the amount of the acrylic is too high (such as, greater than 98 wt%), the overall performance of the topcoat composition will be affected negatively. If the acrylate resins comprise less than 5%, the radiation cure response of the coating and the mechanical resistance performance of the cured film may be negatively affected. As the EVA resins, inorganic fillers, photo initiators and some additives are critical to the coating, it is not recommended that the percentage of the acrylate exceeds 98%.

In still another aspect, the monomers may be present in the radiation curable component in accordance with the present invention in an amount of 0 wt% or greater, such as, 15 wt% or greater, based on the total weight of the radiation curable component. Moreover, the monomers may be present in the radiation curable component in accordance with the present invention in an amount of 100 wt% or less, such as, 95 wt% or less based on the total weight of the radiation curable component. For instance, the monomers may be present in the radiation curable component in accordance with the present invention in an amount of 10 wt% to 95 wt%, such as, 20 wt% to 60 wt%, or 30 wt% to 40 wt%, based on the total weight of the radiation curable component. If the amount of the monomers is too high (e.g., greater than 95 wt%), the radiation cure response of the coating and/or the flexibility of the cured film may be negatively affected.

In an aspect, the radiation curable component in accordance with the present invention may comprise:
(b-1) 5-98% by weight of the acrylate oligomer;
(b-2) 2-95% by weight of the monomer, and
(b-3) 0 to 10% by weight of the photoinitiator,
based on the total weight of the radiation curable component.

The topcoat composition in accordance with the present invention comprises a combination of a specially selected thermoplastic component with a radiation curable component, thereby achieving good flame retardant and good iodine resistant properties while keeping the traditional advantages of UV coatings including, environmental friendly and VOC-free properties, fast curing, easy application, superior mechanical resistances, and the like.

In addition to the aforesaid components, the topcoat composition in accordance with the present invention may further comprise pigments and/or additional additives to improve the performances thereof.

As previously stated, the topcoat composition in accordance with the present invention may comprise a pigment which refers to a material capable of imparting color(s), filling, and/or abrasion resistance to the target object(s). Typically, such pigments comprise organic pigments and inorganic pigments, and the inorganic pigments are also known as mineral pigments. In an aspect, the pigment suitable for use in the topcoat composition may comprise an inorganic pigment. Typical examples of inorganic pigments can include, but are not limited to, alumina (Al₂O₃), titania (TiO₂), calcium carbonate (CaCO₃), barium carbonate (BaCO₃), aluminum powders (Al), ferric oxide (Fe₂O₃), silica (SiO₂) or the like. In a further aspect, the pigment suitable for use in the topcoat composition of the present invention may comprise alumina, amorphous silica, or ground silica because they can impart or further improve the flame retardance and abrasion resistance of the topcoat composition. In an aspect, the pigment may comprise 1 wt% or greater of the topcoat composition, such as, 5 wt% or greater or 7 wt% or greater. In another aspect, the pigment may comprise 60 wt% or less of the topcoat composition, such as, 40 wt% or less or 20 wt% or less. In addition to providing color, the pigments may further serve to adjust the gloss (i.e., as matt agents) or improve the mechanical resistance (i.e., as pigmented fillers) in the topcoat composition in accordance with the present invention.

The topcoat composition in accordance with the present invention may further comprise one or more photoinitiators to facilitate photo-curing. Here, the term "photoinitiator" refers to a class of materials which can be decomposed under radiation and initiate a polymerization of polymerizable oligomers and/or monomers to form a three-dimensional netlike structure. The photoinitiators suitable for use in the topcoat composition in accordance with the present invention may comprise any conventional photoinitiator which is commonly used in the field of polymers. Typical examples of useful photoinitiators may include, but are not limited to, one or more selected from the group consisting of: IRGACURE 1173 - BASF, IRGACURE 184 - BASF, IHT-PI-BP, and IHT-PI TPO. In an aspect, the photoinitiator may be present in the topcoat compositions in accordance with the present invention in an amount of 0 wt% or greater, such as, 1 wt% or greater or 2 wt% or greater, based on the total weight of the topcoat composition. In another aspect, the pigment may be present in the topcoat compositions in accordance with the present invention in an amount of 10 wt% or less, such as, 4 wt% or less, based on the total weight of the topcoat composition.

Moreover, the topcoat composition in accordance with the present invention may further comprise other additives. For instance, defoamers can inhibit the formation of bubbles and allow the generated bubbles to escape or break during production. Matting agents can reduce the gloss of the coating film formed from the topcoat composition or allow the formed coating film to have matting appearance. Solvents can adjust the viscosity of the topcoat composition. Leveling agents can improve the handling property of coating to produce a flat and smooth coating layer. Perfumes can improve a pleasing odor to the coatings. Rheology modifiers can improve good flowability and leveling property and reduce the defects during the emulsification. Preservatives can protect the coating from going moldy. Fillers serve in a topcoat to increase the solid content and reduce the production cost. PH adjustors serve to control the pH value and stabilize the coating. Waxes serve to increase the anti-scratching property and improve the touch feeling. Thickeners can increase the viscosity of the coating and improve the thickness of wetting film and protecting the topcoat from precipitation and layer separation. Other additives, such as, rust inhibitors, hardening agents, slipping agents, UV absorbing agents, etc., can also be used in the topcoat composition of the present invention, as long as they are physically and chemically compatible with the primary components of the topcoat composition of the present invention and can impart one or more benefits to the topcoat composition. In practice, each additional additive may contain 0.1 to 8% by weight of the topcoat composition in accordance with the present invention.

The present invention further provides a method of coating at least a portion of a substrate, comprising the steps of coating the substrate with the radiation curable topcoat composition in accordance with the present invention; and curing the topcoat composition under UV radiation. As noted, the term "substrate" refers to materials which have coarse or smooth surfaces with or without primer thereon. Typical examples of substrates include, but are not limited to, those made from plastics (e.g., PE, PVC, etc.); woods (e.g., oak or pine materials); artificial wood-based materials (e.g., plywoods, chipboards, particle boards, etc.); metals (stainless steel, aluminum, aluminum alloy, etc.); glass; ceramic; or any combination thereof. The substrates suitable for use in receiving the topcoat composition in accordance with the present invention may include, but are not limited to, wood, plastics (e.g., PVC, and PU substrates), etc.

The present invention further provides a substrate at least partially coated with the topcoat composition in accordance with the present invention.

The following examples are presented to demonstrate the general principles of the invention. The Examples describe the preparation and test of the high solids content topcoat composition having good iodine stain resistance and flame retardance of the present invention. All amounts as listed are described in parts by total weight, and all percentages as listed are based on weight, unless otherwise indicated.

### PREPARATION EXAMPLES

The topcoat compositions 1-6 comprising components as described hereinafter were prepared generally by taking 800g sample for preparing each topcoat composition. That is, in the preparation of each of those topcoat compositions, acrylic oligomer(s) and acrylic monomer(s) (i.e., the radiation curable component), as well as solvent(s) were added into a 1L stainless steel container. The mixture was stirred at 600 to 800 rpm with an IKA high speed dispersion equipment (1500 rpm) for 10 min. Then, an EVA and/or a chloride vinyl acetate resin (i.e., the thermoplastic) was added, and the mixture was stirred at 1000-1200 rpm until the thermoplastic was totally dissolved into the radiation curable component to achieve a viscosity of 8000-15000 cps (Brookfield RVT #3 Spindle 20 RPM @25°C). Next, pigment or pigments were added into the mixture, and stirred at a temperature below 70°C with a high speed mixer for less than 60 min. Finally, the remaining components of the topcoat composition (including, but not limited to, photo initiator(s), and other monomers, as well as other additive(s), if used, were added, and the mixture was stirred until a homogeneous mixture was formed, thereby producing the desired topcoat composition.

Here are the topcoat compositions prepared as described above.

**Topcoat Composition Example-1:**

| | |
|---|---|
| EVA: DuPont ELVAX 150W | 5 % |
| VINISOL: lu'ou T32 EVA vinisol resin | 10% |
| Acrylic oligomer: PPG URETHANE ACRYLATE | 20% |
| Acrylic oligomer: Guangdong Wuxing EA8204 | 20% |
| Acrylic monomer: isobornyl acrylate (IBOA) | 5% |
| Acrylic monomer: isodecyl acrylate (IDA) | 15% |
| Solvent: propylene glycol methyl ether acetate (pma) | 20% |
| photo initiators: IRGACURE 184 ―BASF | 3% |
| photo initiators: IHT-PI-BP | 2% |

**Topcoat Composition Example-2:**

| | |
|---|---|
| Vinisol: Wacker vinnol E22/48 | 8% |
| EVA: DuPont ELVAX 150W | 8% |
| Acrylic oligomer: ETERNAL 6196-100 | 10% |
| Acrylic oligomer: Jiangsu Sanmu SM6105-75Y | 20% |
| Acrylic oligomer: Guangdong JESIDA DSP-552F | 15% |
| Acrylic monomer: trimethylolpropane triacrylate (TMPTA) | 35% |
| photo initiators: IRGACURE 1173 ―BASF | 2% |
| photo initiators: IHT-PITPO | 2% |

**Topcoat Composition Example-3:**

| | |
|---|---|
| EVA: DuPont ELVAX 150W | 5% |
| Acrylic oligomer: PPG URETHANE ACRYLATE | 34% |
| Acrylic oligomer: Guangdong JESIDA DSP-552F | 10% |
| Acrylic monomer: isobornyl acrylate (IBOA) | 10% |
| Acrylic monomer: isodecyl acrylate (IDA) | 10% |
| AL2O3: MICROGRIT WCA 3S - MICRO ABRASIVES CORPORATION | 10% |
| Ground silica: TREMIX958-600EST - SIBELCO | 10% |
| Silica matt agent: SYLOID ED 80 - GRACE DAVISON | 5% |
| photo initiators: IRGACURE 1173 - BASF | 6% |

**Topcoat Composition Example-4:**

| | |
|---|---|
| Unmodified vinisol: wacker vinnol E22/48 A | 5% |
| modified vinisol: lu'ou T32 EVA vinisol resin | 5% |
| Unmodified eva: DuPont ELVAX 150W | 5% |
| Solvent: N-BUTYL ACETATE | 10% |
| Acrylic oligomer: PPG URETHANE ACRYLATE | 10% |
| Acrylic oligomer: Jiangsu Sanmu SM6105-75Y | 9.8% |
| Acrylic monomer: trimethylolpropane triacrylate (TMPTA) | 30% |
| Acrylic monomer: isobornyl acrylate (IBOA) | 5% |
| Silica matt agent: SYLOID ED 80 - GRACE DAVISON | 3% |
| Al2O3: MICROGRIT WCA 3S - MICRO ABRASIVES CORPORATION | 10% |
| Ground silica: TEGO AIREX 920 - EVONIK INDUSTRIES | 0.2% |
| photo initiators: IHT-PI-BP | 2% |
| photo initiators: IHT-PI TPO | 2% |
| photo initiators: IRGACURE 184 ― BASF | 3% |

**Topcoat Composition Example-5 without photo initiator:**

| | |
|---|---|
| EVA: DuPont ELVAX 150W | 5% |
| Acrylic oligomer: PPG URETHANE ACRYLATE | 34% |
| Acrylic oligomer: Guangdong JESIDA DSP-552F | 13% |
| Acrylic monomer: isobornyl acrylate (IBOA) | 10% |
| Acrylic monomer: isodecyl acrylate (IDA) | 13% |
| AL2O3: MICROGRIT WCA 3S - MICRO ABRASIVES CORPORATION | 10% |
| Ground silica: TREMIX958-600EST - SIBELCO | 10% |
| Silica matt agent: SYLOID ED 80 - GRACE DAVISON | 5% |

Here are two comparative examples

**Comparative Example-1 (without EVA or vinisol)**

| | |
|---|---|
| Acrylic oligomer: ALLNEX EB 809 | 50% |
| Acrylic monomer: Eternal ETERMER 2211 | 18% |
| Acrylic monomer: MIWON Miramer M130 | 15% |
| Silica matt agent: SYLOID ED 80 - GRACE DAVISON | 8% |
| AL2O3: MICROGRIT WCA 3S - MICRO ABRASIVES CORPORATION | 5% |
| Pigment: IRGACURE 1173 - BASF | 2.5% |
| Pigment: IHT-PI-BP | 1.5% |

**Comparative Example-2 (Using different thermoplastic component)**

| | |
|---|---|
| Acrylic oligomer: ALLNEX EB 809 | 15% |
| Acrylic monomer: Eternal ETERMER 2211 | 35% |
| Acrylic monomer: MIWON MIRAMER M3190 | 20% |
| thermoplastic component: TEGO ADDBOND LTH | 10% |
| Silica matt agent: SYLOID ED 30 - GRACE DAVISON | 5% |
| Pigment: Sibelco silverBond 602 | 5% |
| Pigment: IHT-PI TPO | 3% |
| Pigment: IRGACURE 184 ― BASF | 2% |

### TESTS:

The topcoat compositions 1-6 as prepared in the aforesaid examples and the aforesaid comparative examples were tested for their respective flame retardance in accordance with the method of EN 13501-1:2007+A1:2009, and for their respective iodine stain resistance in accordance with the method of EN 438-2:2005. The results are listed, respectively, in the Table-1 and Table -2 below.

**Table-1:**

| Example No. | 1 | 2 | 3 | 4 | 5 |
|---|---|---|---|---|---|
| Flame Retardance | Level B or Level C | Level B or Level C | Level B or Level C | Level B or Level C | Level B or Level C |
| Iodine Stain Resistance | Rating 4 | Rating 5 | Rating 5 | Rating 5 | Rating 5 |

**Table-2:**

| Example No. | Comparative Example-1 | Comparative Example-2 |
|---|---|---|
| Flame Retardance | Level D | Level D |
| Iodine Stain Resistance | Rating 3 | Rating 3 |

| | | |
|---|---|---|
| Note 1: Flame Retardance level under EN13501-1:2007+A1:2009: Level A is the highest, then Level B, Level C, Level D, and so on. Note 2: Stain rating under EN 438-2:2005 are asfollows: Rating 5: no visible change; Rating 4: slight change of gloss and /or color, only visible at certain viewing angles; Rating 3: moderate change of gloss and/or color; Rating 2: marked change of gloss and/or color; and Rating 1: surface distortion and/or blistering. | | |

It can be seen from the above examples and tests that the topcoat compositions of the present invention exhibit good flame retardance and excellent iodine stain resistance, while the comparative compositions do not.

## Claims

1. A high solid content flame retardant and iodine stain resistant radiation curable topcoat composition comprising:
(a) a thermoplastic component including one or both of ethylene vinyl acetate resin comprising 5-45% of vinyl acetate units in its backbone and chloride vinyl acetate resin comprising 3-45% of vinyl acetate units in its backbone; and
(b) a radiation curable component including:
(b-1) one or more acrylic oligomers selected from polyurethane acrylate, polyester acrylate, epoxy acrylate, and oligomers comprising one or more acrylic repeating units; and
(b-2) one or more acrylic monomers comprising isobornyl acrylate (IBOA), isodecyl acrylate (IDA), trimethylolpropane triacrylate (TMPTA), pentaerythritol triacrylate (PETA), or pentaerythritol tetraacrylate (PETTA),
wherein the composition comprises 50 to 100 wt. % of solid components.

2. The topcoat composition of claim 1, wherein the ethylene vinyl acetate resin or the chloride vinyl acetate has a weight average molecular weight ranging from 5,000 to 50,000 as measured by gel permeation chromatography.

3. The topcoat composition of claim 1, wherein the chloride vinyl acetate comprises 5-45% of vinyl acetate units in its backbone.

4. The topcoat composition of claim 1, wherein the ethylene vinyl acetate resin is modified with polyvinyl chloride.

5. The topcoat composition of claim 1, wherein the chloride vinyl acetate resin is modified with styrene maleic anhydride.

6. The topcoat composition of claim 1, wherein the radiation curable component further comprises one or more photo initiators.

7. The topcoat composition of claim 1, further comprising: at least one pigment.

8. The topcoat composition of claim 7, wherein the pigment is alumina or silica.

9. The topcoat composition of claim 1, wherein the one or more acrylic monomers comprise isobornyl acrylate and isodecyl acrylate.

10. The topcoat composition of claim 9, comprising, based on the total weight of the topcoat composition:
(a) 1-95% by weight of the thermoplastic component;
(b) 5-99% by weight of the radiation curable component; and
(c) 0-60% by weight of the pigment.

11. A method of coating at least a portion of a substrate comprising the steps of: coating the substrate with the radiation curable topcoat composition in accordance with any one of claims 1 to 10; and curing the topcoat composition under UV radiation.

12. A substrate being at least partially coated with the topcoat composition in accordance with any one of claims 1 to 10.

13. The substrate of claim 12, wherein the substrate comprises wood.

14. The substrate of claim 12, wherein the substrate comprises plastic.

## Patentansprüche

1. Flammhemmende, gegen lodflecken beständige, strahlungshärtbare Decklackzusammensetzung mit hohem Feststoffgehalt, die enthält:
(a) eine thermoplastische Komponente, die eines oder beides enthält von Ethylen-Vinylacetat-Harz, das 5 bis 45 % Vinylacetateinheiten in seinem Grundgerüst enthält, und Vinylchlorid-Vinylacetat-Harz, das 3 bis 45 % Vinylacetateinheiten in seinem Grundgerüst enthält, und
(b) eine strahlungshärtbare Komponente enthaltend:
(b-1) ein oder mehrere acrylische Oligomere, ausgewählt aus Polyurethanacrylat, Polyesteracrylat, Epoxyacrylat und Oligomeren, die eine oder mehrere acrylische Wiederholungseinheiten enthalten, und
(b-2) ein oder mehrere acrylische Monomere, enthaltend Isobornylacrylat (IBOA), Isodecylacrylat (IDA), Trimethylolpropantriacrylat (TMPTA), Pentaerythritoltriacrylat (PETA) oder Pentaerythritoltetraacrylat (PETTA),
wobei die Zusammensetzung 50 bis 100 Gew.-% feste Komponenten enthält.

2. Decklackzusammensetzung nach Anspruch 1, wobei das Ethylen-Vinylacetat-Harz oder das Vinylchlorid-Vinylacetat-Harz ein gewichtsmittleres Molekulargewicht im Bereich von 5.000 bis 50.000, wie mit Gelpermeationschromatographie gemessen, aufweist.

3. Decklackzusammensetzung nach Anspruch 1, wobei das Vinylchlorid-Vinylacetat-Harz 5 bis 45 % Vinlylacetateinheiten in seinem Grundgerüst aufweist.

4. Decklackzusammensetzung nach Anspruch 1, wobei das Ethylen-Vinylacetat-Harz mit Polyvinylchlorid modifiziert ist.

5. Decklackzusammensetzung nach Anspruch 1, wobei das Vinylchlorid-Vinylacetat-Harz mit Styrol/Maleinsäureanhydrid modifiziert ist.

6. Decklackzusammensetzung nach Anspruch 1, wobei die strahlungshärtbare Komponente ferner einen oder mehrere Photoinitiatoren enthält.

7. Decklackzusammensetzung nach Anspruch 1, die ferner mindestens ein Pigment enthält.

8. Decklackzusammensetzung nach Anspruch 7, wobei das Pigment Aluminiumoxid oder Siliciumdioxid ist.

9. Decklackzusammensetzung nach Anspruch 1, wobei das eine oder die mehreren acrylischen Monomere Isobornylacetat und Isodecylacrylat enthalten.

10. Decklackzusammensetzung nach Anspruch 9, enthaltend, bezogen auf das Gesamtgewicht der Decklackzusammensetzung:
(a) 1 bis 95 Gew.-% der thermoplastischen Komponente,
(b) 5 bis 99 Gew.-% der strahlungshärtbaren Komponente und
(c) 0 bis 60 Gew.-% des Pigments.

11. Verfahren zur Beschichtung mindestens eines Teils eines Substrats, umfassend die Schritte: Beschichten des Substrats mit der strahlungshärtbaren Decklackzusammensetzung gemäß einem der Ansprüche 1 bis 10 und Härten der Decklackzusammensetzung unter UV-Bestrahlung.

12. Substrat, das mindestens teilweise mit der Decklackzusammensetzung gemäß einem der Ansprüche 1 bis 10 beschichtet ist.

13. Substrat nach Anspruch 12, wobei das Substrat Holz umfasst.

14. Substrat nach Anspruch 12, wobei das Substrat Kunststoff umfasst.

## Revendications

1. Composition pour couche de finition à haute teneur en solides, ignifugeante et résistante à la coloration par l'iode, durcissable sous rayonnement, comprenant :
a) un composant thermoplastique comprenant de l'une des résines suivantes ou des deux : une résine d'éthylène et d'acétate de vinyle comprenant de 5 à 45 % de motifs dérivés de l'acétate de vinyle dans son squelette, et une résine d'acéto-chlorure de vinyle comprenant de 3 à 45 % de motifs dérivés de l'acétate de vinyle dans son squelette,
b) et un composant durcissable sous rayonnement, comprenant
b-1) un ou plusieurs oligomère(s) d'acrylique, choisi(s) parmi un polyuréthane-acrylate, un polyester-acrylate, une résine époxy-acrylate et des oligomères comprenant un ou plusieurs motif(s) répété(s) de type acrylique,
b-2) et un ou plusieurs monomère(s) acrylique(s) comprenant de l'acrylate d'isobornyle (IBOA), de l'acrylate d'isodécyle (IDA), du triacrylate de triméthylolpropane (TMPTA), du triacrylate de pentaérythritol (PETA) ou du tétraacrylate de pentaérythritol (PETTA),
laquelle composition comprend de 50 à 100 % en poids de composants solides.

2. Composition pour couche de finition, conforme à la revendication 1, dans laquelle la résine d'éthylène et d'acétate de vinyle ou la résine d'acéto-chlorure de vinyle présente une masse molaire moyenne en poids qui, mesurée par chromatographie par perméation de gel, vaut de 5 000 à 50 000.

3. Composition pour couche de finition, conforme à la revendication 1, dans laquelle la résine d'acéto-chlorure de vinyle comprend de 5 à 45 % de motifs dérivés de l'acétate de vinyle dans son squelette.

4. Composition pour couche de finition, conforme à la revendication 1, dans laquelle la résine d'éthylène et d'acétate de vinyle est modifiée avec du poly(chlorure de vinyle).

5. Composition pour couche de finition, conforme à la revendication 1, dans laquelle la résine d'acéto-chlorure de vinyle est modifiée avec du styrène et de l'anhydride maléique.

6. Composition pour couche de finition, conforme à la revendication 1, dans laquelle le composant durcissable sous rayonnement comprend en outre un ou plusieurs photo-amorceur(s).

7. Composition pour couche de finition conforme à la revendication 1, qui comprend en outre au moins un pigment.

8. Composition pour couche de finition, conforme à la revendication 7, dans laquelle le pigment est de l'alumine ou de la silice.

9. Composition pour couche de finition, conforme à la revendication 1, dans laquelle le ou les monomère(s) acrylique(s) comprend ou comprennent de l'acrylate d'isobornyle et de l'acrylate d'isodécyle.

10. Composition pour couche de finition conforme à la revendication 9, qui comprend, par rapport au poids total de la composition pour couche de finition,
a) de 1 à 95 % en poids du composant thermoplastique,
b) de 5 à 99 % en poids du composant durcissable sous rayonnement,
c) et de 0 à 60 % en poids du pigment.

11. Procédé de revêtement d'au moins une partie d'un substrat, comportant les étapes suivantes : revêtir le substrat d'une composition pour couche de finition, durcissable sous rayonnement, conforme à l'une des revendications 1 à 10 ; et faire durcir la composition pour couche de finition, sous rayonnement UV.

12. Substrat revêtu, au moins en partie, d'une composition pour couche de finition, conforme à l'une des revendications 1 à 10.

13. Substrat conforme à la revendication 12, lequel substrat comprend du bois.

14. Substrat conforme à la revendication 12, lequel substrat comprend une matière plastique.
